# EUROPEAN PATENT APPLICATION

(11) **EP 2 544 433 A1**
(43) Date of publication of application: **09.01.2013**
(21) Application number: 12001683.7
(22) Date of filing: 12.03.2012
(51) Int. Cl.: H04M 1/725, G06F 3/048

(54) **Mobile terminal and controlling method thereof**

(30) Priority: 05.07.2011 KR 20110066318
(71) Applicant: LG Electronics Inc., Yeongdeungpo-gu Seoul 150-721 (KR)
(72) Inventor: Won, Il, Seoul 153-801 (KR); Yang, Hyejeong, Seoul 153-801 (KR)
(74) Representative: Urner, Peter

(57) **Abstract**

The present invention includes a wireless communication unit configured to transceive a chat content with at least one counterpart terminal, a controller configured to control at least one chat window respectively corresponding to the at least one counterpart terminal, each of the at least one chat window displaying the chat content transceived with a specific counterpart terminal corresponding to the corresponding chat window among the at least one counterpart terminal, and a touchscreen configured to display the at least one chat window and one input window for receiving an input of the chat content, wherein if the entire region corresponding to the at least one chat window is bigger than a display region of the touch screen, the controller is further configured to control the touchscreen to display the partial region belonging to the display region of the touchscreen among the entire region corresponding to the at least one chat window.

In addition multiple examples for controlling multiple chat windows are disclosed.

## Description

### BACKGROUND OF THE INVENTION

### Field of the Invention

The present invention relates to a mobile terminal, and more particularly, to a mobile terminal and controlling method thereof.

### Discussion of the Related Art

Generally, terminals can be classified into mobile/portable terminals and stationary terminals. The mobile terminals can be classified into handheld terminals and vehicle mount terminals again according to possibility of user's direct portability.

As functions of the terminal are diversified, the terminal is implemented as a multimedia player provided with composite functions such as photographing of photos or moving pictures, playback of music or moving picture files, game play, broadcast reception and the like for example.

To support and increase of the terminal functions, it may be able to consider the improvement of structural part and/or software part of the terminal.

Recently, it becomes possible for a terminal to provide a conversation service with an external counterpart terminal owning to the technological development of smart phones and the like. Through the conversation service, a mobile terminal is able to exchange conversation messages with a specific counterpart terminal via 3G or 4G communication network without a computer.

Such a smart phone as I-phone, Android phone and the like is able o provide a conversation service with an external terminal using a chat application and the like. And, a chat service with a plurality of counterpart terminals can be provided using smart phones.

However, since a conversation or chat with a plurality of counterpart terminals proceeds via a terminal, if a plurality of chats are not efficiently managed, at least one of the chats may not proceed normally. Hence, in case of providing a plurality of chat services, there is an ongoing need to manage a plurality of the chat services via a mobile terminal simultaneously and efficiently.

### SUMMARY OF THE INVENTION

Accordingly, the present invention is directed to a mobile terminal and controlling method thereof that substantially obviate one or more problems due to limitations and disadvantages of the related art.

An object of the present invention is to provide a mobile terminal and controlling method thereof, by which a multi-chat with a plurality of counterpart terminals can be simultaneously performed using one input window.

Another object of the present invention is to provide a mobile terminal and controlling method thereof, by which a plurality of chat windows can be easily switched using a degree of an inclination of the mobile terminal.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a mobile terminal according to the present invention includes a wireless communication unit configured to transceive a chat content with at least one counterpart terminal, a controller configured to control at least one chat window respectively corresponding to the at least one counterpart terminal, each of the at least one chat window displaying the chat content transceived with a specific counterpart terminal corresponding to the corresponding chat window among the at least one counterpart terminal, and a touchscreen configured to display the at least one chat window and one input window for receiving an input of the chat content, wherein if entire region corresponding to the at least one chat window is bigger than a display region of the touch screen, the controller is further configured to control the touchscreen to display partial region belonging to the display region of the touchscreen among the entire region corresponding to the at least one chat window.

Preferably, the controller is further configured to set a summary window configured to manage the at least one chat window and wherein the controller controls the summary window to be displayed on the display region.

More preferably, touchscreen is further configured to display at least one summary chat window, each of the at least one summary window chat corresponding to each of the at least one chat window and wherein the summary chat window indicates a presence or non-presence of a received chat content of the corresponding chat window.

More preferably, the touchscreen is further configured to display at least one summary chat window, each of the at least one summary window corresponding to each of the at least one chat window and wherein if a specific summary chat window is selected among the at least one summary chat window via the touchscreen, the controller controls a specific chat window corresponding to the selected specific summary chat window to be displayed on an entire display region of the touchscreen.

Preferably, if a specific chat content is inputted via the input window, the controller is further configured to control the specific chat content to be simultaneously displayed on the at least one chat window.
Preferably, if a touch action for adjusting each of the at least one chat window is inputted, the touchscreen is further configured to display the corresponding chat window in a manner of adjusting a size or position of each of the at least one chat window, based on the touch action.

Preferably, the mobile terminal further includes a sensing unit configured to determine inclination information of the mobile terminal.

More preferably, the controller is further configured to control the touchscreen to display the at least one chat window in a manner of shifting the at least one chat window to correspond to the inclination information of the mobile terminal determined by the sensing unit, and wherein if the icon is positioned on the specific chat window among the at least one chat window, the controller is further configured to control the specific chat window to be selected.

Preferably, the mobile terminal further includes a microphone module configured to receive an input of an external audio content, wherein the controller is further configured to convert the external audio content to the chat content and controls the converted chat content to be displayed on the at least one chat window.

In another aspect of the present invention, a method of controlling a mobile terminal may include the steps of initiating a multi-chat operation with at least one counterpart terminal, setting at least one chat window respectively corresponding to the at least one counterpart terminal, each of the at least one chat window displaying a chat content transceived with a specific counterpart terminal corresponding to the corresponding chat window among the at least one counterpart terminal, and displaying the at least one chat window and one input window for receiving an input of the chat content, wherein if entire region corresponding to the at least one chat window is bigger than a display region of the touch screen, the controller controls the touchscreen to display partial region belonging to the display region of the touchscreen among the entire region corresponding to the at least one chat window.

Accordingly, the above-configured mobile terminal according to at least one embodiment of the present invention is capable of performing a multi-chat with a plurality of counterparts simultaneously, thereby facilitating a chat to be switched from one counterpart to another counterpart among a plurality of the counterparts in the course of the ongoing chat.

Moreover, the above-configured mobile terminal according to at least one embodiment of the present invention may be able to switch a chat window using such an easy action as a terminal inclination and the like.

Effects obtainable from the present invention may be non-limited by the above mentioned effect. And, other unmentioned effects can be clearly understood from the following description by those having ordinary skill in the technical field to which the present invention pertains.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a block diagram of a mobile terminal according to one embodiment of the present invention;

FIG. 2A is a front perspective diagram of a mobile terminal according to one embodiment of the present invention;

FIG. 2B is a rear perspective diagram of a mobile terminal according to one embodiment of the present invention;

FIG. 3A and FIG. 3B are front diagrams of a mobile terminal according to one embodiment of the present invention for explaining one operational status of the mobile terminal, respectively;

FIG. 4 is a flowchart for a method of controlling a mobile terminal according to the present invention;

FIG. 5 is a schematic diagram for an operation of providing a multi-chat service according to the present invention;

FIG. 6A and FIG. 6B are diagrams of displaying a plurality of chat windows as planar chat windows according to the present invention;

FIG. 7A and FIG. 7B are diagrams of displaying a plurality of chat windows as layered chat windows according to the present invention;

FIG. 8 is a diagram for displaying a summary window according to the present invention;

FIG. 9 is a diagram for one example of an operation of switching a chat window according to the present invention;

FIG. 10 is a diagram for another example of an operation of switching a chat window according to the present invention;

FIG. 11 is a diagram of an input window for inputting chat contents according to the present invention;

FIGs. 12A to 12C are diagrams for operations of inputting chat contents according to the present invention;

FIG. 13 is a diagram of an operation on receiving a chat content according to the present invention; and

FIG. 14A and FIG. 14B are diagrams for a chat window merging operation according to the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts. The suffixes 'module' and 'unit' for the elements used in the following description are given or used in common by considering facilitation in writing this disclosure only but fail to have meanings or roles discriminated from each other.

First of all, mobile terminals described in this disclosure can include a mobile phone, a smart phone, a laptop computer, a digital broadcast terminal, a PDA (personal digital assistants), a PMP (portable multimedia player), a navigation system and the like.

Except a case applicable to a mobile terminal only, it is apparent to those skilled in the art that the configurations according to an embodiment described in this disclosure is applicable to such a stationary terminal as a digital TV, a desktop computer and the like.

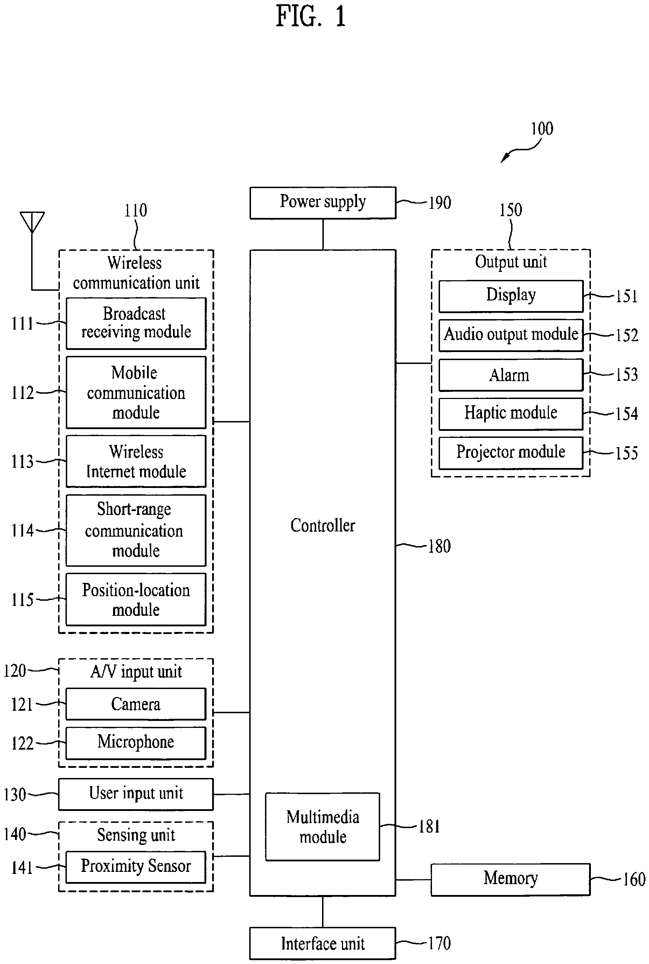

FIG. 1 is a block diagram of a mobile terminal according to one embodiment of the present invention.

Referring to FIG. 1, a mobile terminal 100 according to one embodiment of the present invention includes a wireless communication unit 110, an A/V (audio/video) input unit 120, a user input unit 130, a sensing unit 140, an output unit 150, a memory 160, an interface unit 170, a controller 180, a power supply unit 190 and the like. FIG. 1 shows the mobile terminal 100 having various components, but it is understood that implementing all of the illustrated components is not a requirement. Greater or fewer components may alternatively be implemented.

In the following description, the above elements of the mobile terminal 100 are explained in sequence.

First of all, the wireless communication unit 110 typically includes one or more components which permits wireless communication between the mobile terminal 100 and a wireless communication system or network within which the mobile terminal 100 is located. For instance, the wireless communication unit 110 can include a broadcast receiving module 111, a mobile communication module 112, a wireless internet module 113, a short-range communication module 114, a position-location module 115 and the like.

The broadcast receiving module 111 receives a broadcast signal and/or broadcast associated information from an external broadcast managing server via a broadcast channel.

The broadcast channel may include a satellite channel and a terrestrial channel.

The broadcast managing server generally refers to a server which generates and transmits a broadcast signal and/or broadcast associated information or a server which is provided with a previously generated broadcast signal and/or broadcast associated information and then transmits the provided signal or information to a terminal. The broadcast signal may be implemented as a TV broadcast signal, a radio broadcast signal, and a data broadcast signal, among others. If desired, the broadcast signal may further include a broadcast signal combined with a TV or radio broadcast signal.

The broadcast associated information includes information associated with a broadcast channel, a broadcast program, a broadcast service provider, etc. And, the broadcast associated information can be provided via a mobile communication network. In this case, the broadcast associated information can be received by the mobile communication module 112.

The broadcast associated information can be implemented in various forms. For instance, broadcast associated information may include an electronic program guide (EPG) of digital multimedia broadcasting (DMB) and electronic service guide (ESG) of digital video broadcast-handheld (DVB-H).

The broadcast receiving module 111 may be configured to receive broadcast signals transmitted from various types of broadcast systems. By nonlimiting example, such broadcasting systems include digital multimedia broadcasting-terrestrial (DMB-T), digital multimedia broadcasting-satellite (DMB-S), digital video broadcast-handheld (DVB-H), the data broadcasting system known as media forward link only (MediaFLO®) and integrated services digital broadcast-terrestrial (ISDB-T). Optionally, the broadcast receiving module 111 can be configured suitable for other broadcasting systems as well as the above-explained digital broadcasting systems.

The broadcast signal and/or broadcast associated information received by the broadcast receiving module 111 may be stored in a suitable device, such as a memory 160.

The mobile communication module 112 transmits/receives wireless signals to/from one or more network entities (e.g., base station, external terminal, server, etc.). Such wireless signals may represent audio, video, and data according to text/multimedia message transceivings, among others.

The wireless internet module 113 supports Internet access for the mobile terminal 100. This module may be internally or externally coupled to the mobile terminal 100. In this case, the wireless Internet technology can include WLAN (Wireless LAN) (Wi-Fi), Wibro (Wireless broadband), Wimax (World Interoperability for Microwave Access), HSDPA (High Speed Downlink Packet Access), etc.

The short-range communication module 114 facilitates relatively short-range communications. Suitable technologies for implementing this module include radio frequency identification (RFID), infrared data association (IrDA), ultra-wideband (UWB), as well at the networking technologies commonly referred to as Bluetooth and ZigBee, to name a few.

The position-location module 115 identifies or otherwise obtains the location of the mobile terminal 100. If desired, this module may be implemented with a global positioning system (GPS) module.

Referring to FIG. 1, the audio/video (A/V) input unit 120 is configured to provide audio or video signal input to the mobile terminal 100. As shown, the A/V input unit 120 includes a camera 121 and a microphone 122. The camera 121 receives and processes image frames of still pictures or video, which are obtained by an image sensor in a video call mode or a photographing mode. And, the processed image frames can be displayed on the display unit 151.

The image frames processed by the camera 121 can be stored in the memory 160 or can be externally transmitted via the wireless communication unit 110. Optionally, at least two cameras 121 can be provided to the mobile terminal 100 according to environment of usage.

The microphone 122 receives an external audio signal while the portable device is in a particular mode, such as phone call mode, recording mode and voice recognition. This audio signal is processed and converted into electric audio data. The processed audio data is transformed into a format transmittable to a mobile communication base station via the mobile communication module 112 in case of a call mode. The microphone 122 typically includes assorted noise removing algorithms to remove noise generated in the course of receiving the external audio signal.

The user input unit 130 generates input data responsive to user manipulation of an associated input device or devices. Examples of such devices include a keypad, a dome switch, a touchpad (e.g., static pressure/capacitance), a jog wheel, a jog switch, etc.

The sensing unit 140 provides sensing signals for controlling operations of the mobile terminal 100 using status measurements of various aspects of the mobile terminal. For instance, the sensing unit 140 may detect an open/close status of the mobile terminal 100, relative positioning of components (e.g., a display and keypad) of the mobile terminal 100, a change of position of the mobile terminal 100 or a component of the mobile terminal 100, a presence or absence of user contact with the mobile terminal 100, orientation or acceleration/deceleration of the mobile terminal 100. As an example, consider the mobile terminal 100 being configured as a slide-type mobile terminal. In this configuration, the sensing unit 140 may sense whether a sliding portion of the mobile terminal is open or closed. Other examples include the sensing unit 140 sensing the presence or absence of power provided by the power supply 190, the presence or absence of a coupling or other connection between the interface unit 170 and an external device. And, the sensing unit 140 can include a proximity sensor 141.

The output unit 150 generates outputs relevant to the senses of sight, hearing, touch and the like. And, the output unit 150 includes the display unit 151, an audio output module 152, an alarm unit 153, a haptic module 154, a projector module 155 and the like.

The display unit 151 is typically implemented to visually display (output) information associated with the mobile terminal 100. For instance, if the mobile terminal is operating in a phone call mode, the display will generally provide a user interface (UI) or graphical user interface (GUI) which includes information associated with placing, conducting, and terminating a phone call. As another example, if the mobile terminal 100 is in a video call mode or a photographing mode, the display unit 151 may additionally or alternatively display images which are associated with these modes, the UI or the GUI.

The display module 151 may be implemented using known display technologies including, for example, a liquid crystal display (LCD), a thin film transistor-liquid crystal display (TFT-LCD), an organic light-emitting diode display (OLED), a flexible display and a three-dimensional display. The mobile terminal 100 may include one or more of such displays.

Some of the above displays can be implemented in a transparent or optical transmittive type, which can be named a transparent display. As a representative example for the transparent display, there is TOLED (transparent OLED) or the like. A rear configuration of the display unit 151 can be implemented in the optical transmittive type as well. In this configuration, a user is able to see an object in rear of a terminal body via the area occupied by the display unit 151 of the terminal body.

At least two display units 151 can be provided to the mobile terminal 100 in accordance with the implemented configuration of the mobile terminal 100. For instance, a plurality of display units can be arranged on a single face of the mobile terminal 100 in a manner of being spaced apart from each other or being built in one body. Alternatively, a plurality of display units can be arranged on different faces of the mobile terminal 100.

In case that the display unit 151 and a sensor for detecting a touch action (hereinafter called 'touch sensor') configures a mutual layer structure (hereinafter called 'touchscreen'), it is able to use the display unit 151 as an input device as well as an output device. In this case, the touch sensor can be configured as a touch film, a touch sheet, a touchpad or the like.

The touch sensor can be configured to convert a pressure applied to a specific portion of the display unit 151 or a variation of a capacitance generated from a specific portion of the display unit 151 to an electric input signal. Moreover, it is able to configure the touch sensor to detect a pressure of a touch as well as a touched position or size.

If a touch input is made to the touch sensor, signal (s) corresponding to the touch is transferred to a touch controller. The touch controller processes the signal(s) and then transfers the processed signal(s) to the controller 180. Therefore, the controller 180 is able to know whether a prescribed portion of the display unit 151 is touched.

Referring to FIG. 1, a proximity sensor (not shown in the drawing) can be provided to an internal area of the mobile terminal 100 enclosed by the touchscreen or around the touchscreen. The proximity sensor is the sensor that detects a presence or non-presence of an object approaching a prescribed detecting surface or an object existing around the proximity sensor using an electromagnetic field strength or infrared ray without mechanical contact. Hence, the proximity sensor has durability longer than that of a contact type sensor and also has utility wider than that of the contact type sensor.

The proximity sensor can include one of a transmittive photoelectric sensor, a direct reflective photoelectric sensor, a mirror reflective photoelectric sensor, a radio frequency oscillation proximity sensor, an electrostatic capacity proximity sensor, a magnetic proximity sensor, an infrared proximity sensor and the like. In case that the touchscreen includes the electrostatic capacity proximity sensor, it is configured to detect the proximity of a pointer using a variation of electric field according to the proximity of the pointer. In this case, the touchscreen (touch sensor) can be classified as the proximity sensor.

In the following description, for clarity, an action that a pointer approaches without contacting with the touchscreen to be recognized as located on the touchscreen is named 'proximity touch'. And, an action that a pointer actually touches the touchscreen is named 'contact touch'. The meaning of the position on the touchscreen proximity-touched by the pointer means the position of the pointer which vertically opposes the touchscreen when the pointer performs the proximity touch.

The proximity sensor detects a proximity touch and a proximity touch pattern (e.g., a proximity touch distance, a proximity touch duration, a proximity touch position, a proximity touch shift state, etc.). And, information corresponding to the detected proximity touch action and the detected proximity touch pattern can be outputted to the touchscreen.

The audio output module 152 functions in various modes including a call-receiving mode, a call-placing mode, a recording mode, a voice recognition mode, a broadcast reception mode and the like to output audio data which is received from the wireless communication unit 110 or is stored in the memory 160. During operation, the audio output module 152 outputs audio relating to a particular function (e.g., call received, message received, etc.). The audio output module 152 is often implemented using one or more speakers, buzzers, other audio producing devices, and combinations thereof.

The alarm unit 153 is output a signal for announcing the occurrence of a particular event associated with the mobile terminal 100. Typical events include a call received event, a message received event and a touch input received event. The alarm unit 153 is able to output a signal for announcing the event occurrence by way of vibration as well as video or audio signal. The video or audio signal can be outputted via the display unit 151 or the audio output unit 152. Hence, the display unit 151 or the audio output module 152 can be regarded as a part of the alarm unit 153.

The haptic module 154 generates various tactile effects that can be sensed by a user. Vibration is a representative one of the tactile effects generated by the haptic module 154. Strength and pattern of the vibration generated by the haptic module 154 are controllable. For instance, different vibrations can be outputted in a manner of being synthesized together or can be outputted in sequence.

The haptic module 154 is able to generate various tactile effects as well as the vibration. For instance, the haptic module 154 generates the effect attributed to the arrangement of pins vertically moving against a contact skin surface, the effect attributed to the injection/suction power of air though an injection/suction hole, the effect attributed to the skim over a skin surface, the effect attributed to the contact with electrode, the effect attributed to the electrostatic force, the effect attributed to the representation of hold/cold sense using an endothermic or exothermic device and the like.

The haptic module 154 can be implemented to enable a user to sense the tactile effect through a muscle sense of finger, arm or the like as well as to transfer the tactile effect through a direct contact. Optionally, at least two haptic modules 154 can be provided to the mobile terminal 100 in accordance with the corresponding configuration type of the mobile terminal 100.

The projector module 155 is the element for performing an image projector function using the mobile terminal 100. And, the projector module 155 is able to display an image, which is identical to or partially different at least from the image displayed on the display unit 151, on an external screen or wall according to a control signal of the controller 180.

In particular, the projector module 155 can include a light source (not shown in the drawing) generating light (e.g., laser) for projecting an image externally, an image producing means (not shown in the drawing) for producing an image to output externally using the light generated from the light source, and a lens (not shown in the drawing) for enlarging to output the image externally in a predetermined focus distance. And, the projector module 155 can further include a device (not shown in the drawing) for adjusting an image projected direction by mechanically moving the lens or the whole module.

The projector module 155 can be classified into a CRT (cathode ray tube) module, an LCD (liquid crystal display) module, a DLP (digital light processing) module or the like according to a device type of a display means. In particular, the DLP module is operated by the mechanism of enabling the light generated from the light source to reflect on a DMD (digital micro-mirror device) chip and can be advantageous for the downsizing of the projector module 151.

Preferably, the projector module 155 can be provided in a length direction of a lateral, front or backside direction of the mobile terminal 100. And, it is understood that the projector module 155 can be provided to any portion of the mobile terminal 100 according to the necessity thereof.

The memory unit 160 is generally used to store various types of data to support the processing, control, and storage requirements of the mobile terminal 100. Examples of such data include program instructions for applications operating on the mobile terminal 100, contact data, phonebook data, messages, audio, still pictures, moving pictures, etc. And, a recent use history or a cumulative use frequency of each data (e.g., use frequency for each phonebook, each message or each multimedia) can be stored in the memory unit 160. Moreover, data for various patterns of vibration and/or sound outputted in case of a touch input to the touchscreen can be stored in the memory unit 160.

The memory 160 may be implemented using any type or combination of suitable volatile and non-volatile memory or storage devices including hard disk, random access memory (RAM), static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disk, multimedia card micro type memory, card-type memory (e.g., SD memory, XD memory, etc.), or other similar memory or data storage device. And, the mobile terminal 100 is able to operate in association with a web storage for performing a storage function of the memory 160 on Internet.

The interface unit 170 is often implemented to couple the mobile terminal 100 with external devices. The interface unit 170 receives data from the external devices or is supplied with the power and then transfers the data or power to the respective elements of the mobile terminal 100 or enables data within the mobile terminal 100 to be transferred to the external devices. The interface unit 170 may be configured using a wired/wireless headset port, an external charger port, a wired/wireless data port, a memory card port, a port for coupling to a device having an identity module, audio input/output ports, video input/output ports, an earphone port and/or the like.

The identity module is the chip for storing various kinds of information for authenticating a use authority of the mobile terminal 100 and can include User Identify Module (UIM), Subscriber Identify Module (SIM), Universal Subscriber Identity Module (USIM) and/or the like. A device having the identity module (hereinafter called 'identity device') can be manufactured as a smart card. Therefore, the identity device is connectible to the mobile terminal 100 via the corresponding port.

When the mobile terminal 110 is connected to an external cradle, the interface unit 170 becomes a passage for supplying the mobile terminal 100 with a power from the cradle or a passage for delivering various command signals inputted from the cradle by a user to the mobile terminal 100. Each of the various command signals inputted from the cradle or the power can operate as a signal enabling the mobile terminal 100 to recognize that it is correctly loaded in the cradle.

The controller 180 typically controls the overall operations of the mobile terminal 100. For example, the controller 180 performs the control and processing associated with voice calls, data communications, video calls, etc. The controller 180 may include a multimedia module 181 that provides multimedia playback. The multimedia module 181 may be configured as part of the controller 180, or implemented as a separate component.

Moreover, the controller 180 is able to perform a pattern recognizing process for recognizing a writing input and a picture drawing input carried out on the touchscreen as characters or images, respectively.

The power supply unit 190 provides power required by the various components for the mobile terminal 100. The power may be internal power, external power, or combinations thereof.

Various embodiments described herein may be implemented in a computer-readable medium using, for example, computer software, hardware, or some combination thereof. For a hardware implementation, the embodiments described herein may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a selective combination thereof. Such embodiments may also be implemented by the controller 180.

For a software implementation, the embodiments described herein may be implemented with separate software modules, such as procedures and functions, each of which perform one or more of the functions and operations described herein. The software codes can be implemented with a software application written in any suitable programming language and may be stored in memory such as the memory 160, and executed by a controller or processor, such as the controller 180.

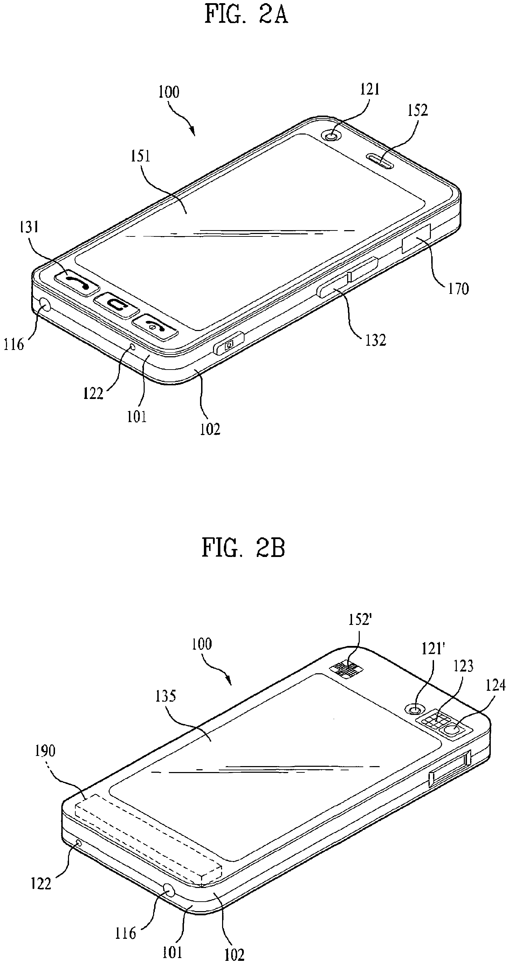

FIG. 2A is a front perspective diagram of a mobile terminal according to one embodiment of the present invention.

The mobile terminal 100 shown in the drawing has a bar type terminal body. Yet, the mobile terminal 100 may be implemented in a variety of different configurations. Examples of such configurations include folder-type, slide-type, rotational-type, swing-type and combinations thereof. For clarity, further disclosure will primarily relate to a bar-type mobile terminal 100. However such teachings apply equally to other types of mobile terminals.

Referring to FIG. 2A, the mobile terminal 100 includes a case (casing, housing, cover, etc.) configuring an exterior thereof. In the present embodiment, the case can be divided into a front case 101 and a rear case 102. Various electric/electronic parts are loaded in a space provided between the front and rear cases 101 and 102. Optionally, at least one middle case can be further provided between the front and rear cases 101 and 102 in addition.

The cases 101 and 102 are formed by injection molding of synthetic resin or can be formed of metal substance such as stainless steel (STS), titanium (Ti) or the like for example.

A display unit 151, an audio output unit 152, a camera 121, user input units 130/131 and 132, a microphone 122, an interface 180 and the like can be provided to the terminal body, and more particularly, to the front case 101.

The display unit 151 occupies most of a main face of the front case 101. The audio output unit 151 and the camera 121 are provided to an area adjacent to one of both end portions of the display unit 151, while the user input unit 131 and the microphone 122 are provided to another area adjacent to the other end portion of the display unit 151. The user input unit 132 and the interface 170 can be provided to lateral sides of the front and rear cases 101 and 102.

The input unit 130 is manipulated to receive a command for controlling an operation of the terminal 100. And, the input unit 130 is able to include a plurality of manipulating units 131 and 132. The manipulating units 131 and 132 can be named a manipulating portion and may adopt any mechanism of a tactile manner that enables a user to perform a manipulation action by experiencing a tactile feeling.

Content inputted by the first or second manipulating unit 131 or 132 can be diversely set. For instance, such a command as start, end, scroll and the like is inputted to the first manipulating unit 131. And, a command for a volume adjustment of sound outputted from the audio output unit 152, a command for a switching to a touch recognizing mode of the display unit 151 or the like can be inputted to the second manipulating unit 132.

FIG. 2B is a perspective diagram of a backside of the terminal shown in FIG. 2A.

Referring to FIG. 2B, a camera 121' can be additionally provided to a backside of the terminal body, and more particularly, to the rear case 102. The camera 121 has a photographing direction that is substantially opposite to that of the former camera 121 shown in FIG. 21A and may have pixels differing from those of the firmer camera 121.

Preferably, for instance, the former camera 121 has low pixels enough to capture and transmit a picture of user's face for a video call, while the latter camera 121' has high pixels for capturing a general subject for photography without transmitting the captured subject. And, each of the cameras 121 and 121' can be installed at the terminal body to be rotated or popped up.

A flash 123 and a mirror 124 are additionally provided adjacent to the camera 121'. The flash 123 projects light toward a subject in case of photographing the subject using the camera 121'. In case that a user attempts to take a picture of the user (self-photography) using the camera 121', the mirror 124 enables the user to view user's face reflected by the mirror 124.

An additional audio output unit 152' can be provided to the backside of the terminal body. The additional audio output unit 152' is able to implement a stereo function together with the former audio output unit 152 shown in FIG. 2A and may be used for implementation of a speakerphone mode in talking over the terminal.

A broadcast signal receiving antenna 124 can be additionally provided to the lateral side of the terminal body as well as an antenna for communication or the like. The antenna 124 constructing a portion of the broadcast receiving module 111 shown in FIG. 1 can be retractably provided to the terminal body.

A power supply unit 190 for supplying a power to the terminal 100 is provided to the terminal body. And, the power supply unit 190 can be configured to be built within the terminal body. Alternatively, the power supply unit 190 can be configured to be detachably connected to the terminal body.

A touchpad 135 for detecting a touch can be additionally provided to the rear case 102. The touchpad 135 can be configured in a light transmittive type like the display unit 151. In this case, if the display unit 151 is configured to output visual information from its both faces, it is able to recognize the visual information via the touchpad 135 as well. The information outputted from both of the faces can be entirely controlled by the touchpad 135. Alternatively, a display is further provided to the touchpad 135 so that a touchscreen can be provided to the rear case 102 as well.

The touchpad 135 is activated by interconnecting with the display unit 151 of the front case 101. The touchpad 135 can be provided in rear of the display unit 151 in parallel. The touchpad 135 can have a size equal to or smaller than that of the display unit 151.

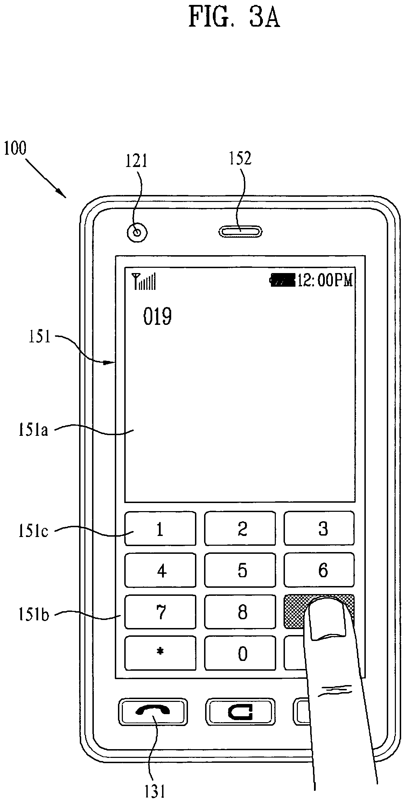

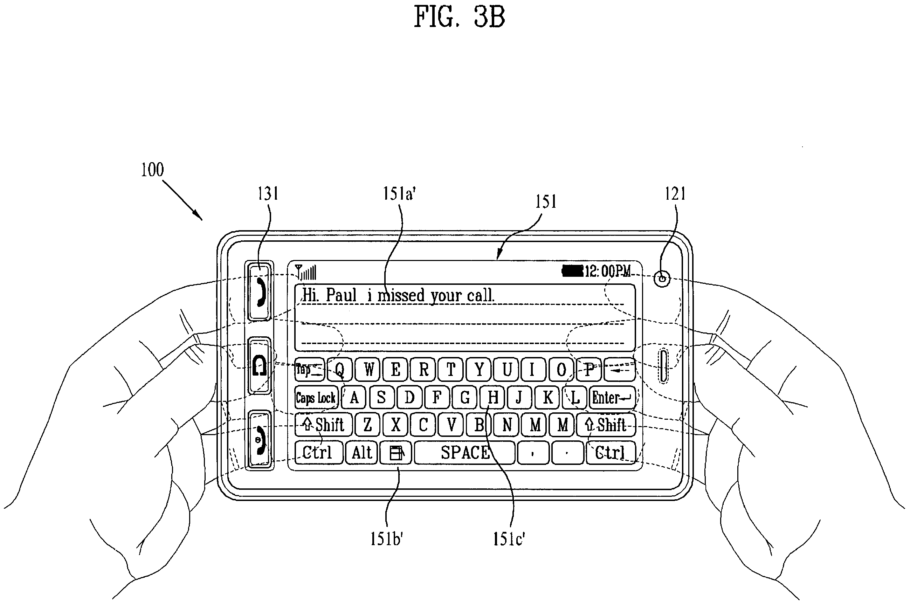

Interconnected operational mechanism between the display unit 151 and the touchpad 135 are explained with reference to FIG. 3A and FIG. 3B as follows.

FIG. 3A and FIG. 3B are front-view diagrams of a terminal according to one embodiment of the present invention for explaining an operational state thereof.

First of all, various kinds of visual informations can be displayed on the display unit 151. And, theses informations can be displayed in characters, numerals, symbols, graphics, icons and the like.

In order to input the information, at least one of the characters, numerals, symbols, graphics and icons are represented as a single predetermined array to be implemented in a keypad formation. And, this keypad formation can be so-called 'soft keys'.

FIG. 3A shows that a touch applied to a soft key is inputted through a front face of a terminal body.

The display unit 151 is operable through an entire area or by being divided into a plurality of regions. In the latter case, a plurality of the regions can be configured interoperable.

For instance, an output window 151a and an input window 151b are displayed on the display unit 151. A soft key 151c representing a digit for inputting a phone number or the like is outputted to the input window 151b. If the soft key 151c is touched, a digit corresponding to the touched soft key is outputted to the output window 151a. If the first manipulating unit 131 is manipulated, a call connection for the phone number displayed on the output window 151a is attempted.

FIG. 3B shows that a touch applied to a soft key is inputted through a rear face of a terminal body. If FIG. 3A shows a case that the terminal body is vertically arranged (portrait), FIG. 3B shows a case that the terminal body is horizontally arranged (landscape). And, the display unit 151 can be configured to change an output picture according to the arranged direction of the terminal body.

FIG. 3B shows that a text input mode is activated in the terminal.

An output window 151a' and an input window 151b' are displayed on the display unit 151. A plurality of soft keys 151c' representing at least one of characters, symbols and digits can be arranged in the input window 151b'. The soft keys 151c' can be arranged in the QWERTY key formation.

If the soft keys 151c' are touched through the touchpad (cf. '135' in FIG. 2B), the characters, symbols and digits corresponding to the touched soft keys are outputted to the output window 151a'. Thus, the touch input via the touchpad 135 is advantageous in that the soft keys 151c' can be prevented from being blocked by a finger in case of touch, which is compared to the touch input via the display unit 151. In case that the display unit 151 and the touchpad 135 are configured transparent, it is able to visually check fingers located at the backside of the terminal body. Hence, more correct touch inputs are possible.

Besides, the display unit 151 or the touchpad 135 can be configured to receive a touch input by scroll. A user scrolls the display unit 151 or the touchpad 135 to shift a cursor or pointer located at an entity (e.g., icon or the like) displayed on the display unit 151. Furthermore, in case that a finger is shifted on the display unit 151 or the touchpad 135, a path of the shifted finger can be visually displayed on the display unit 151. This may be useful in editing an image displayed on the display unit 151.

To cope with a case that both of the display unit (touchscreen) 151 and the touchpad 135 are touched together within a predetermined time range, one function of the terminal can be executed. The above case of the simultaneous touch may correspond to a case that the terminal body is held by a user using a thumb and a first finger (clamping). The above function can include activation or deactivation for the display unit 151 or the touchpad 135.

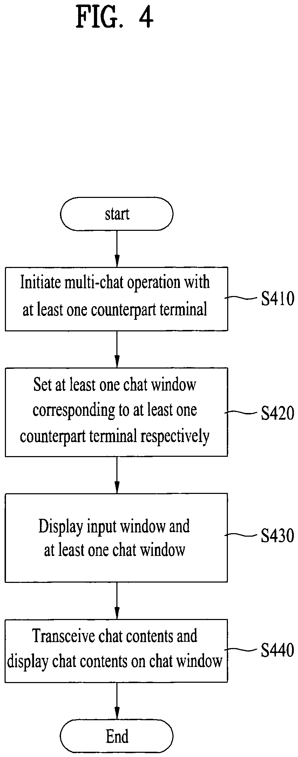

FIG. 4 is a flowchart for a method of controlling a mobile terminal according to the present invention.

Referring to FIG. 4, the mobile terminal 100 initiates a multi-chat operation with at least one counterpart terminal [S410]. The controller 180 sets at least one chat window corresponding to at least one counterpart terminal, respectively [S420]. The touchscreen 151 may display an input window and at least one chat window [S430]. The touchscreen 151 displays a chat content transmitted to or received from the at least one counterpart terminal on the at least one chat window [S440].

The mobile terminal 100 of the present invention may be able to provide a multi-chat function. If a single chat function is the function of exchanging real-time chat content (e.g., text, image, etc.) with at least one counterpart terminal via the mobile terminal 100, the multi-chat function is the function of exchanging real-time chat contents with a plurality of counterpart terminals via the mobile terminal 100.

According to the present invention, when a multi-chat operation is performed, a chat service may be implemented via a chat window. In particular, various contents exchanged with a counterpart terminal may be displayed via a chat window displayable on the touchscreen or the display module.

Basically, a chat window for implementing a chat action is the chat window corresponding to a single counterpart terminal. In particular, when multi-chat actions with 3 counterpart terminals of counterparts A, B and C are implemented, it may be able to set a chat window a corresponding to the counterpart terminal A, a chat window b corresponding to the counterpart terminal B, and a chat window c corresponding to the counterpart terminal C.

Yet, the chat window of the present invention may optionally enable a chat action with a plurality of counterpart terminals using one chat window. Although one chat window is provided for a 1-to-1 chat relation in the above description, one chat window may be set for one-to-many chat relation. In particular, even if the multi-chat action with 3 counterpart terminals A, B and C is implemented, it may be able to set a chat window d for a chat between the counterpart terminal A and the counterpart terminal B and a chat window e for a chat between the mobile terminal 100 and the counterpart terminal C.

Regarding a chat action implemented in one chat window, the chat action can be implemented in the chat window by almost real time. If there is a chat content received via the wireless communication unit 110 from a counterpart terminal, a chat window may be able to display the corresponding chat content by real time. Moreover, in case that there exists a chat content written via the input unit of the mobile terminal 100, a chat window displays the corresponding chat content by real time and may be able to transmit the written content to a counterpart terminal by real time. The wireless communication unit 110 transceives chat contents with counterpart terminals under the control of the controller 180 and the transceived contents may be displayed on the touchscreen 151 via the chat window by real time.

The multi-chat function according to the present invention may include a wide range of chat functions and may be non-limited by the above description.

The mobile terminal 100 receives various user inputs via the touchscreen 151 and may be able to display various contents as well. The touchscreen 151 of the present invention includes a display unit for displaying contents and a touch sensor for sensing a touch action and enables an input function and an output function in a manner that the display unit and the touch sensor configure a mutual layer structure. In this case, the display unit having a touch sensor function is named a touchscreen. In particular, the display unit may be described as the touchscreen in this specification. For clarity and convenience of the following description, in case of the touchscreen 151, a region for displaying contents may be named 'display region'. In the accompanying drawings of this specification, the touchscreen 151 may be described as matching the display region. According to another embodiment of the present invention, there may exist a prescribed difference between the touchscreen 151 and the display region.

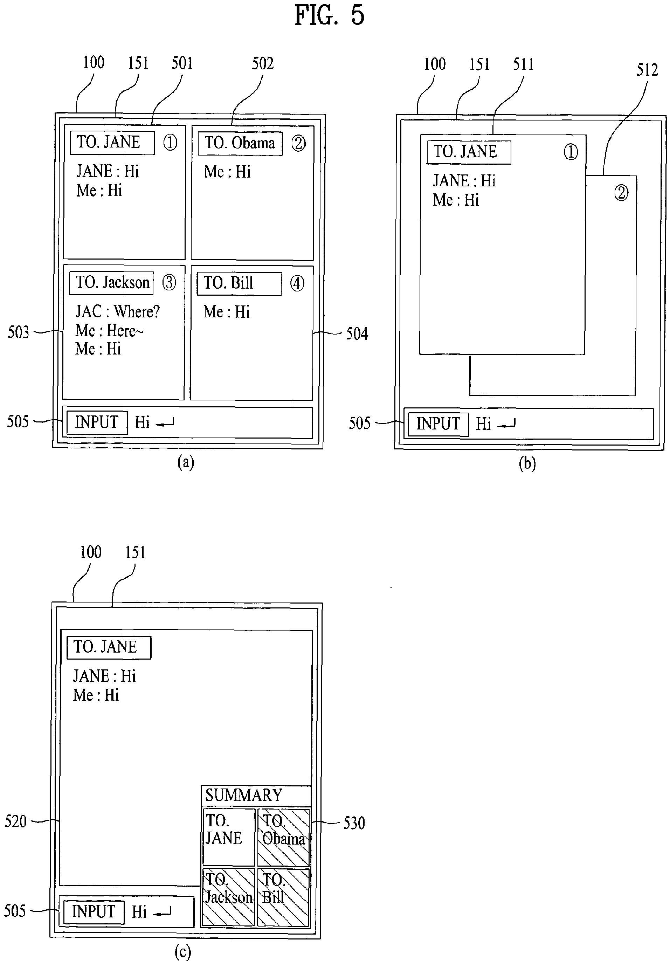

FIG. 5 is a schematic diagram for an operation of providing a multi-chat service according to the present invention.

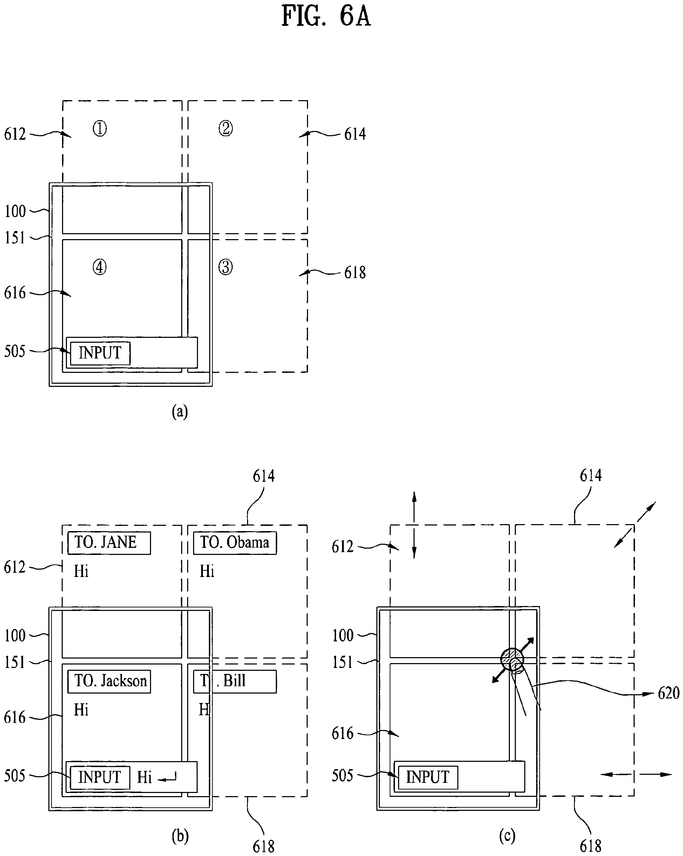

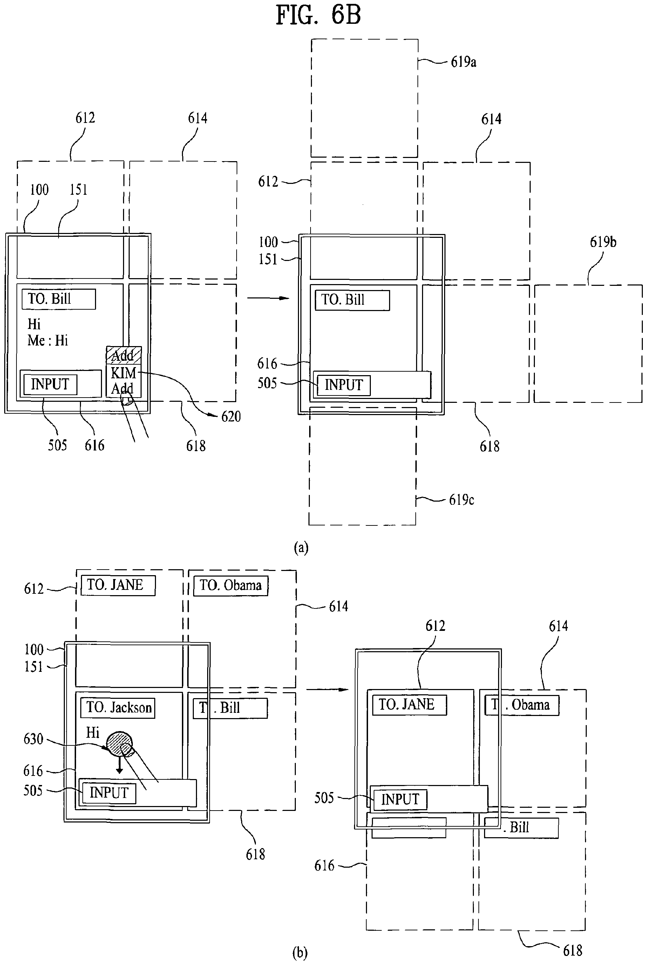

Referring to FIG. 5 (a), a chat window is displayed using a planar chat window system which will be described with reference to FIG. 6A and FIG. 6B.

The touchscreen 151 displays a plurality of chat windows 501 to 504 via a display region. Among a plurality of the chat windows 501 to 504, the 1^{st} chat window 501 is the chat window for a chat action with 'JANE' corresponding to a specific counterpart terminal, the 2^{nd} chat window 502 is the chat window for a chat action with 'Obama' corresponding to a specific counterpart terminal, the 3^{rd} chat window 503 is the chat window for a chat action with 'Jackson' corresponding to a specific counterpart terminal, and the 4^{th} chat window 504 is the chat window for a chat action with 'Bill' corresponding to a specific counterpart terminal.

In doing so, the touchscreen 151 may display an input window 505 as well as the chat windows. In particular, when the input window 505 is displayed, the input window 505 may receive a chat content through a touch action or the like from a user. The chat content inputted via the input window 505 may be displayed on the chat window(s) and may be transmitted to a chat counterpart(s).

In FIG. 5 (a), a plurality of the chat windows are displayed on the touchscreen 151 in a manner of being arranged by avoiding overlapping with each other in the same plane.

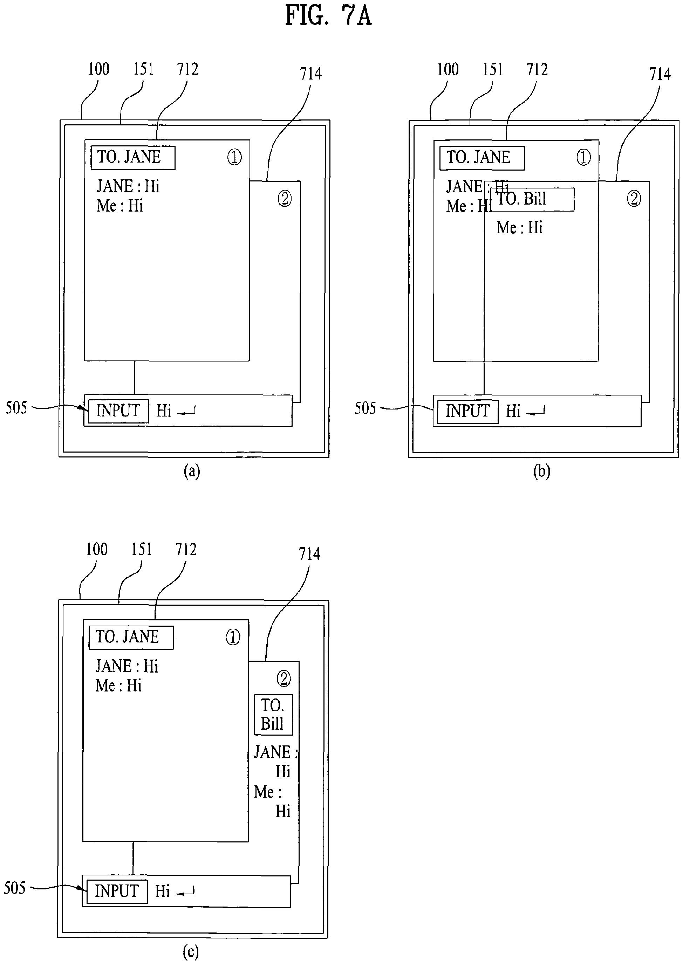

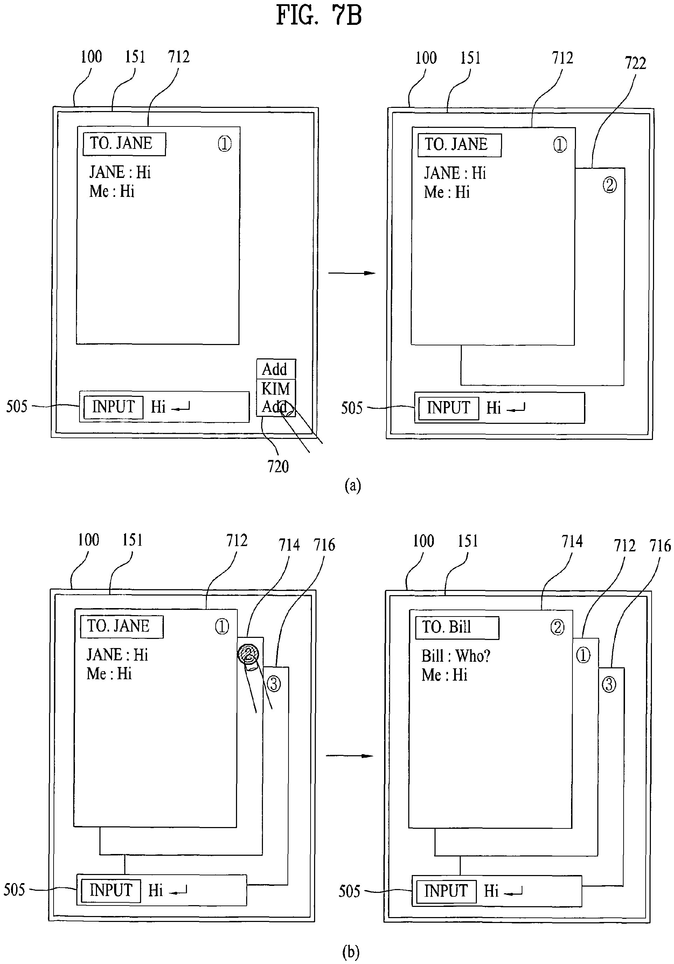

Referring to FIG. 5 (b), a chat window is displayed using a layered chat window system which will be described with reference to FIG. 7A and FIG. 7B.

The touchscreen 151 displays a 1^{st} chat window 511 and a 2^{nd} chat window 512 via a display region. Each of the chat windows is configured to correspond to a specific counterpart terminal and may display chat contents exchanged with the corresponding counterpart terminal. In doing so, the chat windows may be displayed in a manner of existing in different layers by the layered chat window system.

The touchscreen 151 displays an input window 505 and may receive an input of a chat content via the displayed input window 505.

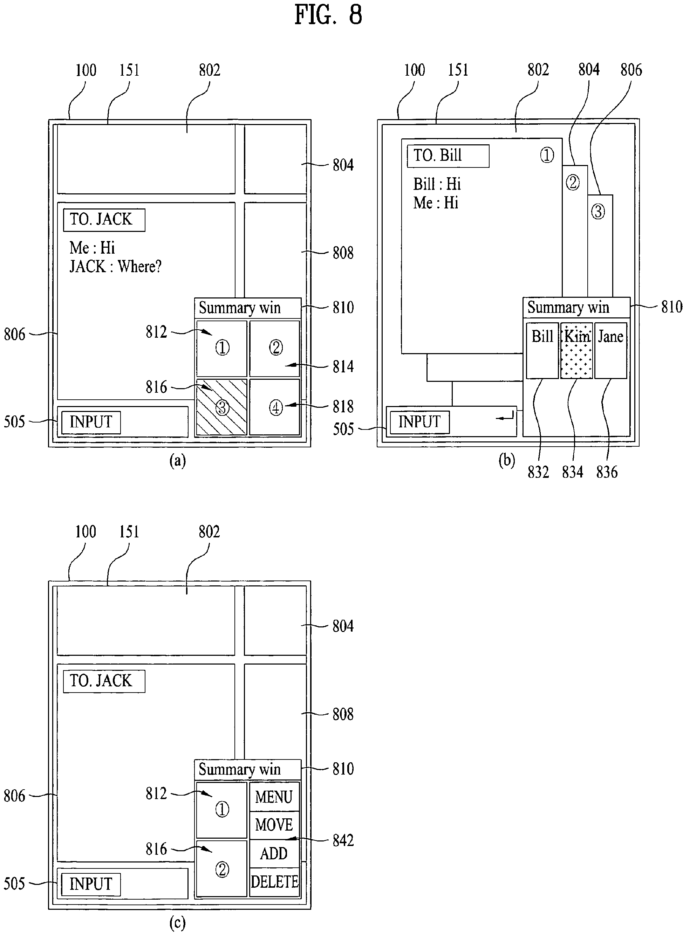

Referring to FIG. 5 (c), a chat window is displayed using a summary window system which will be described in detail with reference to FIG. 8.

According to the present invention, since a chat with a plurality of counterparts simultaneously proceeds via a plurality of chat windows, a method of managing each of the chat windows is necessary. For example, the present invention may manage each of the chat windows using a summary window.

In the drawing, the touchscreen 151 may display a summary window 530 as well as one chat window 520 displayed on the display region. The present invention efficiently manages a plurality of chat windows using the summary window 530, which will be described in detail with reference to FIG. 8 later.

FIG. 6A and FIG. 6B are diagrams of displaying a plurality of chat windows as planar chat windows according to the present invention.

Referring to FIG. 6A and FIG. 6B, a planar chat window system for displaying or arranging a plurality of chat windows is described as follows. The planar chat window system is conceptionally discriminated from the layered chat window system that will be described later and may include the system that enables a plurality of chat windows to be arranged without overlapping with each other. For instance, if a 1^{st} chat window exists, a 2^{nd} chat window may be arranged on a top, bottom, left or right side of the 1^{st} chat window within a range of avoiding overlapping with the 1^{st} chat window and a 3^{rd} chat window may be arranged on a top, bottom, left or right side of the 1^{st} chat window within a range of avoiding overlapping with both of the 1^{st} chat window and the 2^{nd} chat window.

Meanwhile, regarding the planar chat window system for arranging a plurality of chat windows, a chat window may be arranged on a part beyond the display region of the touchscreen 151. Each of the chat windows needs a region for displaying the corresponding chat window. If the entire regions of the chat windows are added up, a total sum may exceed a size of the display region of the touchscreen 151. In this case, the controller 180 may be able to arrange each of the chat windows despite that the display region is exceeded and may control a plurality of contents exchanged with counterpart terminals to be displayed on a plurality of the chat windows, respectively. The controller 180 may set the region of the chat window, which exceeds the display region, to a virtual chat window region. This virtual chat window may not be actually displayed on the display region of the touchscreen 151 but a corresponding chat content may be saved for the virtual chat window in the memory 160 by real time. In particular, irrespective of whether the chat window corresponding chat window corresponds to the display region of the touchscreen 151, the controller 180 may be able to implement a chat function corresponding to each of the chat windows.

Referring to FIG. 6A (a), a planar chat window system including a chat window, which exceeds the display region of the touchscreen 151, is shown. In the drawing, a plurality of chat windows 612, 614, 616 and 618 are set by the controller 180. In particular, the controller 180 sets a plurality of the chat windows within a range of enabling the chat windows to avoid overlapping with each other. In this case, the region of the 4 chat windows 612, 614, 616 and 618 is set bigger than the display region of the touchscreen 151. Hence, each of the 1^{st} chat window 612, the 2^{nd} chat window 614 and the 4^{th} chat window 618 is not displayed on the touchscreen 151 in part. On the other hand, the 3^{rd} chat window 616 is fully displayed on the display region of the touchscreen 151.

Meanwhile, as mentioned in the foregoing description, although each of the 1^{st} chat window 612, the 2^{nd} chat window 614 and the 4^{th} chat window 618 is partially displayed on the touchscreen 151, a chat action with each of the counterpart terminals respectively corresponding to the chat windows is in progress by real time. The controller 180 may be able to keep performing the chat function on the chat counterpart corresponding to each of the chat windows irrespective of the display region of the touchscreen 151.

Referring to FIG. 6A (b), 'Hi' is inputted as a specific chat content via the input window 505. If the specific chat content is inputted, the corresponding chat content may be used as an input chat content of each of a plurality of the chat windows 612, 614, 616 and 618. As mentioned in the foregoing description, although the chat window corresponding to the display region of the touchscreen 151 is the 3^{rd} chat window 616 only, the chat function of each of the chat windows 612, 614 and 618 failing to corresponding to the display region may be implemented. Hence, the inputted chat content 'Hi' may be displayed as the chat content on each of the rest of the chat windows 612, 614 and 618 as well as the 3^{rd} chat window 616.

Referring to FIG. 6A (c), a size or position of a chat window is adjusted in case of the planar chat window system.

As an action of adjusting the size of the chat window, a user's touch action may be usable. In the drawing, a user may be able to touch the touchscreen 151 by means of a specific touch 620. When a user touch is recognized via the touchscreen 151, if the controller 180 determines that the corresponding touch action corresponds to a user touch provided to change a size of the chat window, the controller 180 may be able to adjust the size of the chat window. In the drawing, the size of each of the chat windows 612, 614, 616 and 618 may be changeable through user's touch action.

In case of the plan chat window system, a chat function with a specific counterpart terminal may be ended by deleting a previous chat window. And, a chat function with a specific counterpart terminal may be added by creating a new chat window.

Referring to FIG. 6B (a), an action of creating a new chat window 619 is initiated in addition to a plurality of chat windows arranged by the planar chat window system. If a specific add menu 629 is selected from the touchscreen 151, the controller 180 recognizes the selection as a command for creating a new chat window and then creates a new chat window 619 in addition to the previous chat windows 612, 614, 616 and 618. If a specific counterpart related to the newly created chat windows 612, 614, 616 and 618 is set, the controller 180 sets the chat window 619 for the corresponding specific counterpart. Otherwise, the controller 180 may set the corresponding chat window 619 as a vacant chat window.

Position of the newly created chat windows 612, 614, 616 and 618 may be situated in one of various directions of the previous chat windows 612, 614, 616 and 618. For instance, the newly created chat window 619 may be situated one of a position 619a above the chat window 612, a position 619b right to the chat window 618 and a position 619c below the chat window 616. Each of the positions 619a to 619c deviates from the display region of the touchscreen 151 and is not displayed within the display region. Yet, each of the positions 619a to 619c may be set and managed as a virtual chat window by the controller 180 as well.

Referring to FIG. 6B (b), an action of changing positions of chat windows is shown. For instance, if a touch & drag is performed on a specific region of the touchscreen 151 of the mobile terminal 100, a corresponding chat window may be shifted. Hence, the chat window displayed on the display region is changed from the 3^{rd} chat window 630 before the shift into the 1^{st} chat window 612. In particular, the present invention may be able to shift a plurality of chat windows freely in accordance with a user's action, thereby changing a chat window displayable on the display region of the touchscreen 151.

FIG. 7A and FIG. 7B are diagrams of displaying a plurality of chat windows as layered chat windows according to the present invention.

First of all, a layered chat window system may be used as another system for displaying a plurality of chat windows. In case that a plurality of chat windows for performing chat actions on a plurality of counterpart terminals exist, respectively, a layered chat window system of the present invention means a method of layering a plurality of the chat windows and arranging the layered chat windows on the corresponding layers, respectively.

Referring to FIG. 7A (a), 2 chat windows 712 and 714 are displayed on the display region of the touchscreen 151. The chat windows perform chat actions on specific counterparts different from each other, respectively. In doing so, the 1^{st} chat window 712 and the 2^{nd} chat window 714 are layered from each other. In particular, the 2^{nd} chat window 714 may be set to be unseen in part in a manner of being covered with the 1^{st} chat window 712.

Regarding the layered chat windows, it may be advantageous in that all chat windows can be managed within the display region of the touchscreen 151. Optionally, in case of attempting to enlarge sizes of chat windows, the layered chat windows may be set to exceed the display region.

Referring to FIG. 7A (b), contents of the layered chat windows may be set transparent in-between. Compared to FIG. 7A (a) which shows that the chat content of the 2^{nd} chat window 714 is unseen by being covered with the 1^{st} chat window 712, FIG. 7A (b) shows that the chat windows 712 and 714 can be set to be displayed transparent in-between.

Referring to FIG. 7A (C), contents of the layered chat windows are set viewable in-between. In case of the 1^{st} chat window 712, the exchanged contents are displayed as they are. In case of the 2^{nd} chat window 714, the corresponding content may be set to be displayed on a part of the 2^{nd} chat window 714 that does not overlap with the 1^{st} chat window 714. Hence, the chat content of the 2^{nd} chat window 714 may be changeable in accordance with a shift of the 1^{st} chat window 712.

FIG. 7B shows an action of adding a chat window and an action of shifting a chat window in case of layered chat windows.

Referring to FIG. 7B (a), a 1^{st} chat window 712 and an input window 505 are displayed on the touchscreen 151. If a user selects an add menu 720, the controller 720 may be able to add a new 2^{nd} chat window 722 in addition to the 1^{st} chat window 712. In case of the layered chat window system, a newly added chat window may be created in a manner of being layered with a previous chat window.

Referring to FIG. 7B (b), a chat window may be shifted by a user's selection. When the layered chat windows are used, it may be possible to shift a position of each of the chat windows. While a 1^{st} chat window 712, a 2^{nd} chat window 714 and a 3^{rd} chat window 716 are displayed on the touchscreen 151, the 2^{nd} chat window 714 is selected. In this case, the selected 2^{nd} chat window 714 may be set to be placed foremost among the layered chat windows. In particular, a position of a chat window may be set to be changed by a selection.

FIG. 8 is a diagram for displaying a summary window according to the present invention.

According to the present invention, the mobile terminal 100 simultaneously performs a multi-chat with a plurality of counterpart terminals via a plurality of chat windows. Therefore, a function or means for managing a plurality of the chat windows efficiently is required. For this, the mobile terminal 100 of the present invention may be able to use a summary window configured to manage a multi-chat via a plurality of chat windows efficiently.

The terminology 'summary window' used for the present invention may include an icon-like function of summarizing, managing and displaying a plurality of chat windows.

Referring to FIG. 8 (a), the planar chat window system described with reference to FIG. 6A and FIG. 6B and a summary window are used together. In the drawing, regions belonging to the display region of the touchscreen 151 among a plurality of chat windows 802, 804, 806 and 808 by the planar chat window system are displayed only. In particular, the chat windows 802, 804 and 808 are displayed in part on the display region of the touchscreen 151 only.

A summary window 810 is displayed on a prescribed region of the touchscreen 151. In particular, the summary window 810 may include summary chat windows 812, 814, 816 and 818 corresponding to the chat windows, respectively. In particular, the 1^{st} summary chat window 812 corresponding to the 1^{st} chat window 802, the 2^{nd} summary chat window 814 corresponding to the 2^{nd} chat window 804 and the lie exist. In doing so, since the 3^{rd} chat window 806 displayed on the display region is fully displayed on the display region unlike the rest of the chat windows 802, 804 and 808, the 3^{rd} summary chat window 816 corresponding to the 3^{rd} chat window 806 may be identifiably displayed in a manner of being discriminated from the rest of the summary chat windows.

Referring to FIG. 8 (b), the layered chat window system described with reference to FIG. 7A and FIG. 7B and the summary window system are used together. A plurality of chat windows 802 to 806 and a summary window 810 are displayed together on the touchscreen 151. In particular, the summary window 810 may include summary chat windows 832, 834 and 836 corresponding to the chat windows 802, 804 and 806, respectively. Using each of the summary chat windows 832, 834 and 836, the controller 180 may be able to manage/control the corresponding chat windows.

Meanwhile, it may be able to indicate a message reception from a counterpart of a specific chat window using the summary window 810. For instance, the 2^{nd} summary chat window 834 corresponding to the 2^{nd} chat window 804 is displayed in a manner of differing from the rest of the summary chat windows 832 and 836 to indicate that a message has been received.

Referring to FIG. 8 (c), other functions of the summary window may include a function of adding a new chat window, a function of shifting a chat window, a function of deleting a chat window and the like. These functions for the chat windows are just exemplary and more functions for the chat windows may be provided via the summary window.

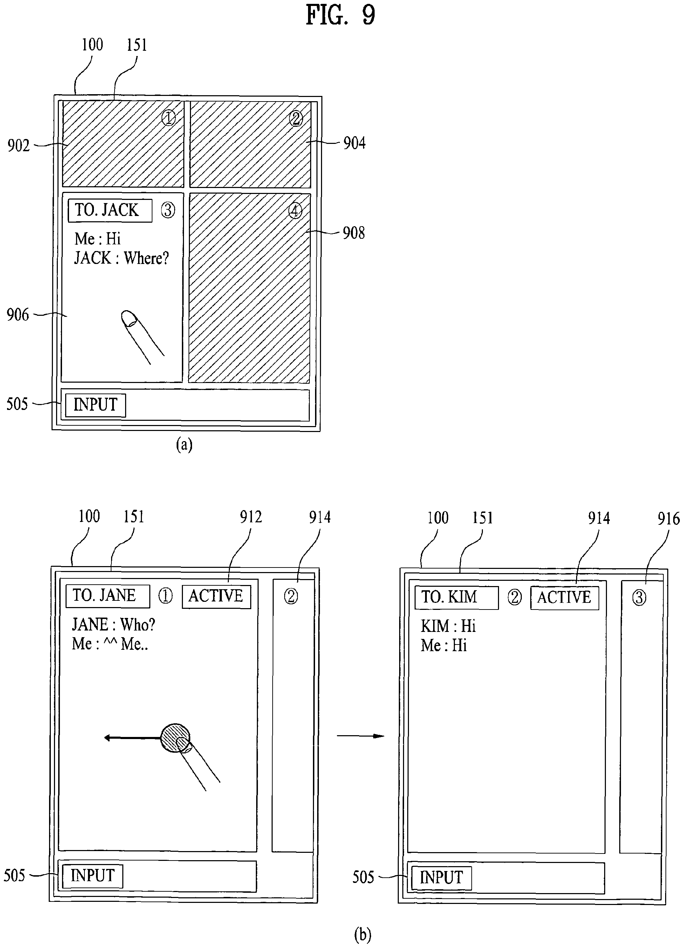

FIG. 9 is a diagram for one example of an operation of switching a chat window according to the present invention.

The mobile terminal 100 according to the present invention may be able to set a main chat window in performing a multi-chat action via a plurality of chat windows. According to the settings, even if a chat content inputted via the input window 505 may be set to be simultaneously inputted to all chat windows, the inputted chat content may be optionally inputted to the main chat window only. Occasionally, it may be unnecessary to forward the same content to all counterparts of the multi-chat. Therefore, although chat contents received from counterparts are received and displayed on the chat window as they are, they may be forwarded only to a chat corresponding to the selected main chat window on inputting a chat content.

Referring to FIG. 9 (a), a plurality of chat windows 902, 904, 906 and 908 are displayed on the display region of the touchscreen 151. In the drawing, shown is an action of selecting a specific chat window 906 as a main chat window by a touch action made by a user. If another chat window is selected by a touch action, the selected chat window may be switched to become a main chat window.

Referring to FIG. 9 (b), a touch & drag action is performed to switch a chat window. The controller 180 may be able to set an active chat window to a chat window belonging to the display region of the touchscreen 151 only. Although a multi-chat is managed and operated via a plurality of chat windows, a specific chat window may be operated as the active chat window only. In the drawing, if a chat window belonging to the display region is set as an active chat window, a 1^{st} chat window 912 is switched to a 2^{nd} chat window 914. A switching action may exist in various ways. In particular, a user's touch & drag action is shown in the drawing for example.

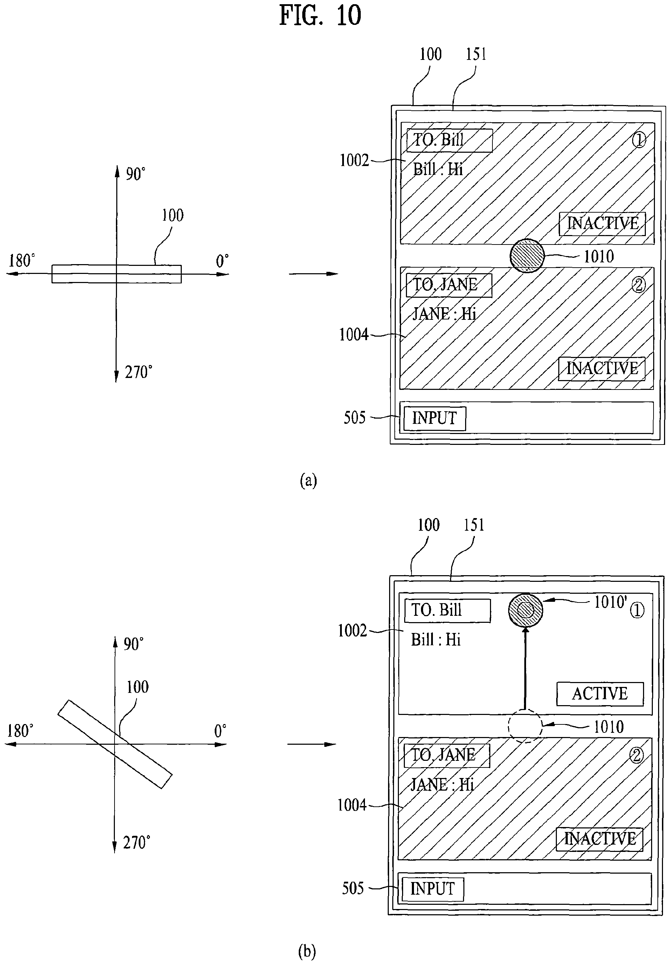

FIG. 10 is a diagram for another example of an operation of switching a chat window according to the present invention.

The mobile terminal 100 according to the present invention includes the sensing unit 140 configured to determine a degree of inclination of the mobile terminal 100. In particular, the sensing unit 140 may be able to determine a degree and direction of the mobile terminal 100 that faces toward a ground. And, the sensing unit 140 may include one of various modules such as a gyroscope module and the like.

The present invention determines an inclination of the mobile terminal as information and may be able to apply the determined information to a chat window switching and the like in various ways.

For instance, if the mobile terminal is inclined in a specific direction, it may be able to set a chat window existing in the specific direction to be selected. Since the sensing unit 140 is capable of determining a speed of the mobile terminal 100 as well as the angle of the inclination of the mobile terminal 100, it may be able to select/switch a chat window correspondingly.

When the mobile terminal is inclined, a user may not be able to clearly determine a specific degree of the inclination of the mobile terminal. Hence, using a specific icon, the specific degree of the inclination of the mobile terminal 100 can be displayed on the touchscreen 151. For clarity and convenience of this specification, a specific icon for determining an inclination degree of the mobile terminal 100 shall be named 'inclination ball' for clarity and convenience of the description.

Having received the inclination information of the mobile terminal 100 from the sensing unit 140, the controller 180 sets the inclination ball to correspond to the inclination information and then displays the inclination ball. For instance, if the mobile terminal 100 inclines at about 10 degrees in southwest direction, the inclination ball may be set to be shifted on the touchscreen 151 by 10 cm in the southwest direction. For another instance, if the mobile terminal 100 inclines at about 40 degrees in north direction, the inclination ball may be set to be shifted on the touchscreen 151 by 40 cm in the southwest direction or outside the display region of the touchscreen 151.

If the inclination ball is used, a user may be able to clearly obtain the inclination degree of the mobile terminal 100. Therefore, the user may be able to give a desired command accurately using the inclination of the mobile terminal 100.

Referring to FIG. 10, an action of switching/selecting a chat window is performed using an inclination ball. FIG. 10 (a) shows a status that the mobile terminal 100 maintains 0 degree not to incline at all. In this case, the inclination ball 100 is situated at the center of the display region of the touchscreen 151 as it is. Hence, any one of the chat windows 1002 and 1004 is not selected yet.

FIG. 10 (b) shows a status that the mobile terminal 100 is inclined in a specific direction. If the inclination information of the mobile terminal 100 is determined via the sensing unit 140, the controller 180 may be able to shift the inclination ball to correspond to the corresponding inclination information. Hence, a chat window, at which the inclination ball is situated, is set to be selected. In the drawing, the 1^{st} chat window 1002 is selected from the chat windows 1002 and 1004 and the selected chat window 1002 is set as an active chat window.

Meanwhile, the inclination ball may be created in various ways. In particular, the inclination ball may be created on the touchscreen 151 in such a preset manner as pressing a button, shaking the mobile terminal 100, touching a specific region and the like. Once the inclination ball is created, an operation of utilizing the inclination information of the mobile terminal 100 can be activated.

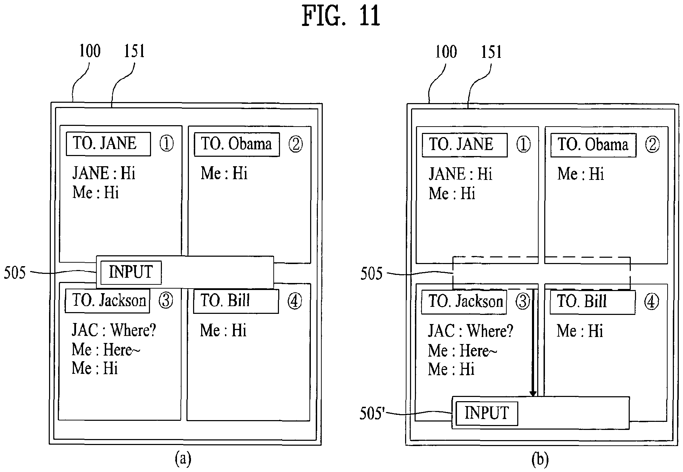

FIG. 11 is a diagram of an input window for inputting chat contents according to the present invention.

First of all, an input window 505 of the present invention may be able to perform a function of providing the same chat content to a plurality of chat windows. There are various methods of providing chat contents to a plurality of chat windows. For instance, if different input windows are set for chat windows, respectively, different chat contents may be displayed on the chat windows, respectively. In particular, the different chat contents may be sent to counter part terminals corresponding to the chat windows with corresponding substances, respectively. In doing so, the chat windows are operated independently and the different chat contents may have no influence on each other.

Referring to FIG. 11, the mobile terminal 100 of the present invention may apply one output window 505 to a plurality of chat windows to manage and operate. In particular, a chat content inputted to the input window 505 may be displayed in a manner of being provided as the same chat content to a plurality of the chat windows. In doing so, regarding a multi-chat action, although the mobile terminal 100 provides different chat contents from a plurality of counterpart terminals to the corresponding chat windows, respectively, the mobile terminal 100 may be able to provide the same chat content, which is provided via one input window, as a chat content provided to each of a plurality of the counterpart terminals. Referring to FIG. 11 (a), although the chat windows receives and display different chat contents from counterpart terminals, respectively, a chat content inputted to the mobile terminal 100 may be identically inputted and displayed as 'Me: Hi'.

The above-configured input window 505 may be situated at one of various positions in the display region. For instance, the input window 505 may be situated at the bottom of the display region of the touchscreen 151 or at the center of the display region shown I FIG. 11 (a).

Moreover, the present invention may shift the position of the input window 505 freely. In order to shift the position of the input window 505, a touch & drag action or a shift menu may be used. Referring to FIG. 11 (b), the input window is shifted by a user's shift action from a center position 505 to a bottom position 505'.

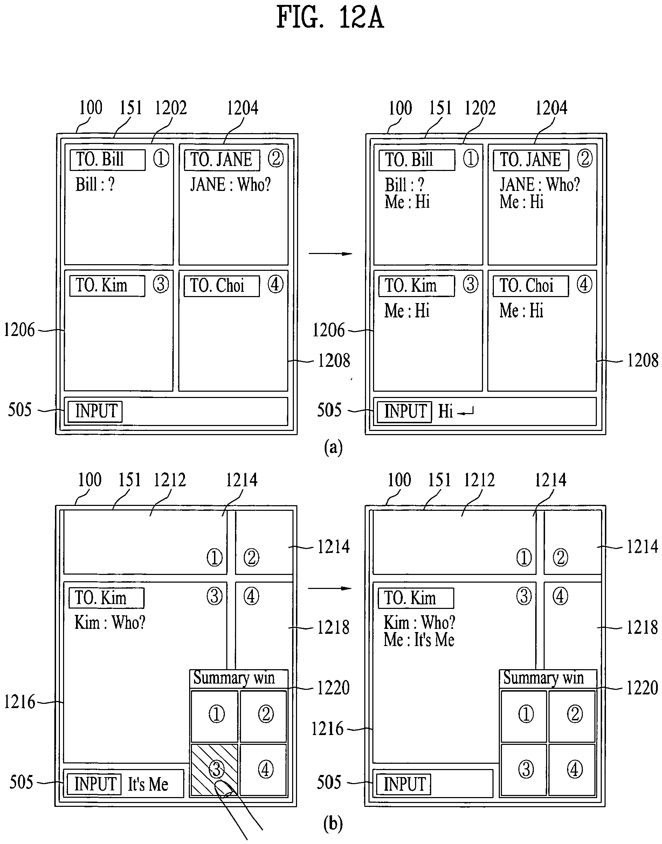

FIG. 12A is a diagram for one example of an action of inputting a chat content to a chat window according to the present invention.

Referring to FIG. 12A, a chat content may be inputted via an input window 505 in various ways. For instance, a chat content inputted to the input window 505 may be simultaneously inputted to a plurality of chat windows or may be inputted to a specific one of a plurality of the chat windows.

Referring to FIG. 12A (a), when a chat content is inputted via the input window 505, the corresponding chat content is simultaneously inputted to a plurality of chat windows. If a specific chat content 'Hi' is inputted via the input window 505, the corresponding chat content may be simultaneously inputted to each of a plurality of chat windows 1202, 1204, 1206 and 1208. Through the simultaneous inputs, a chat service may be provided to counterpart terminals respectively corresponding to a plurality of the chat windows with the same chat content.

Optionally, instead of providing a chat content the moment the chat content is inputted to the input window 505, the chat content may be set to be provided to the counterpart terminal corresponding to each of the chat windows only if a user gives a transmission command. Namely, instead of transmitting a single word or alphabet (or syllable) to a counterpart terminal each time it is inputted to a chat window, it may be able to set a chat content to be provided to the corresponding counterpart terminal only if a user inputs a transmission command after completion of each word or text.

Referring to FIG. 12A (b), instead of providing the same chat content to a plurality of chat windows, an inputted chat content is provided to a selected specific chat window only and the provided chat content is then provided to a counterpart terminal corresponding to the selected specific chat window. Although the specific chat window may be selected in various ways, FIG. 12A (b) shows an example of providing a chat content only to a selected specific chat window 1216 via a summary window 1120.

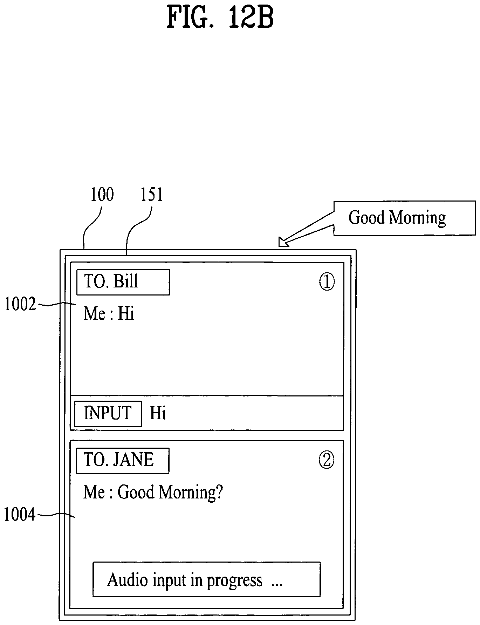

FIG. 12B is a diagram for another example of an action using a microphone 122 as well as an input window.

First of all, although a chat content is generally inputted via the above-mentioned input window 505, it may be inputted in various ways. For instance, if an external audio is inputted via the microphone 122, a chat content corresponding to the inputted external audio is determined by analyzing the substance of the external audio and the determined chat content may be then provided. For another instance, when there is a specific user pattern provided by a user, if the specific user pattern is recognized by the camera module, it may be able to input a provided chat content corresponding to the provided pattern through the recognition.

Referring to FIG. 12B, when various input mechanisms are applicable, different input mechanisms are applied to chat windows, respectively. In the drawing, in case of a 1^{st} chat window 1002, a content is inputted via a general input window and then used as a chat content. In case of a 2^{nd} chat window 1004, a chat content inputted via the microphone is analyzed and the corresponding content is used as a chat content. Since this mechanism enables both an input via the input window and an input via audio simultaneously, a chat service can be performed on at least two chat windows or counterpart terminals with different chat contents.

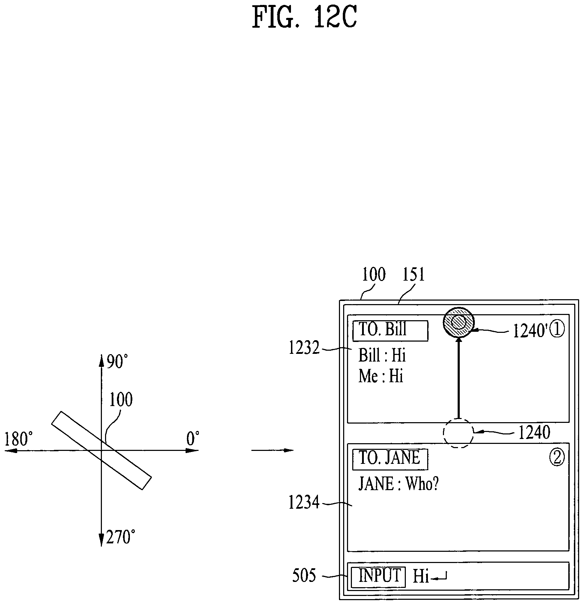

FIG. 12C shows that a specific chat window is selected for a chat content inputted via a chat window from a plurality of chat windows. In particular, the specific chat window is selected by the inclination ball mechanism described with reference to FIG. 10.

Referring to FIG. 12C, when a user inclines the mobile terminal 100, the sensing unit 140 determines inclination information of the mobile terminal 100 and the controller 180 may be then able to shift a position of the inclination ball to correspond to the determined inclination information. If a position of the mobile terminal 100 is changed in a manner of inclining the mobile terminal 100 forward, the inclination ball is controlled to be shifted to a 2^{nd} position 1240' from a 1^{st} position 1240. If so, the controller 180 determines that a 1^{st} chat window 1232 corresponding to the 2^{nd} position 1240' having the inclination ball shifted thereto is selected and then controls an inputted chat content 'Hi' to be displayed on the 1^{st} chat window 1232.

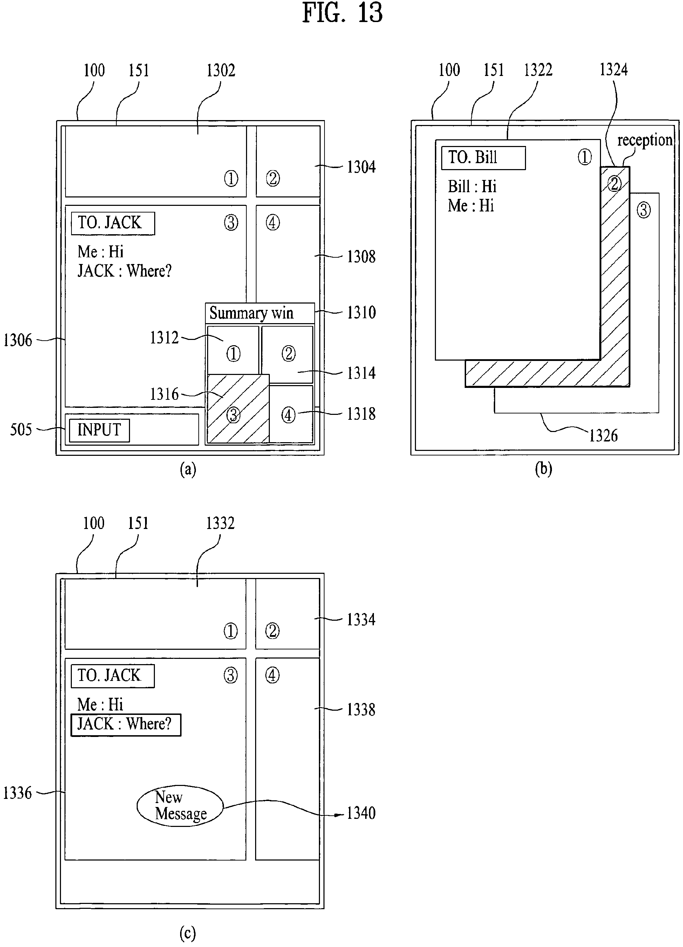

FIG. 13 is a diagram of an operation on receiving a chat content according to the present invention.

According to the present invention, since a multi-chat service is provided via a plurality of chat windows, if a substance received from each counterpart terminal exists, a user of the mobile terminal 100 may be informed of a reception of the substance in various ways. For instance, each time a chat content is inputted from a counterpart terminal, a user may be informed of the input via the haptic module or the speaker module. Alternatively, there may exist a mechanism that a chat window having a received input content exist therein is identifiably displayed in a manner of being discriminated from the rest of chat windows.

Referring to FIG. 13, if there is a received chat content, FIG.13 (a) to FIG. 13 (d) show examples of indicating a reception of the corresponding chat content via the touchscreen 151.

Referring to FIG. 13 (a), if a chat content is received from a counterpart terminal corresponding to a specific chat window 1306, an event of the reception is indicated via a summary window 1310. In this case, the mechanism of indicating the reception event via the summary window 1310 may exist in various ways. For example of the various mechanisms, in the drawing, a size of the summary chat window 1316 corresponding to the chat content received chat window 1306 may be adjusted to be discriminated from the rest of summary chat windows 1312, 1314 and 1318.

Referring to FIG. 13 (b), if a chat content is received from a counterpart terminal corresponding to a specific chat window 1324, the corresponding specific chat window 1324 is displayed in a manner of being discriminated from the rest of chat windows 1322 and 1326. In the drawing, if a chat content is inputted to the specific chat window 1324 according to the layered chat window system, the corresponding specific chat window 1324 is differentiated from other chat windows in shade or color to inform a user of an event of the reception of the chat content.

Referring to FIG. 13 (c), if a chat content is received from a counterpart terminal corresponding to a specific chat window 1336, an action of indicating an event of a reception of a new chat content is directly performed on a region of the corresponding specific chat window 1336. In the drawing, if a new chat content 'Where?' is received in the chat window 1336, a user may be informed of an event of the reception of the new chat content in a manner that an indication window 1340 is displayed on a prescribed region of the chat window 1336.

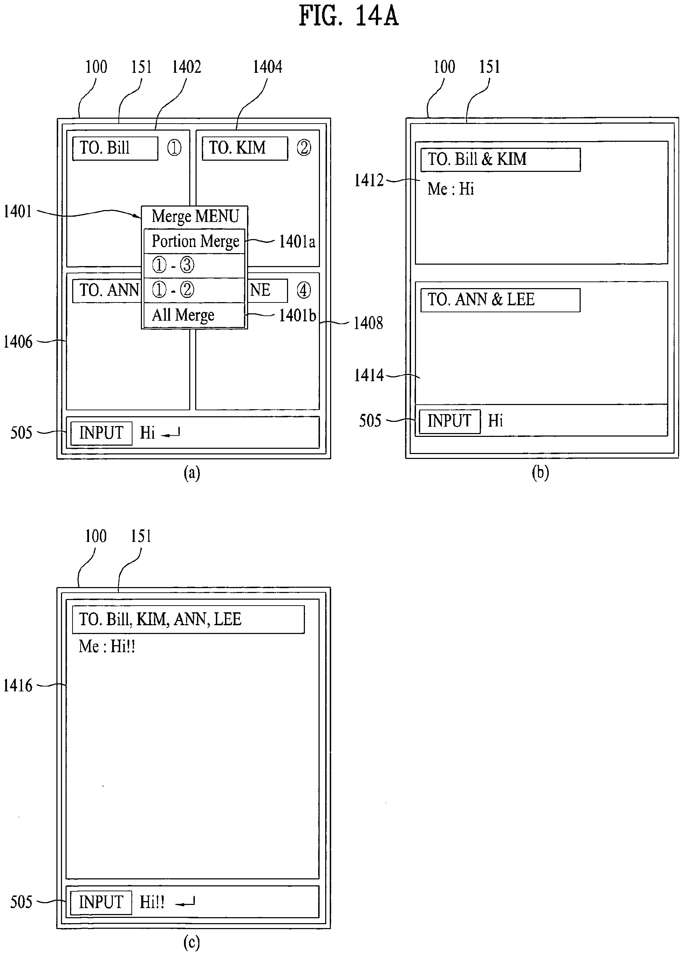

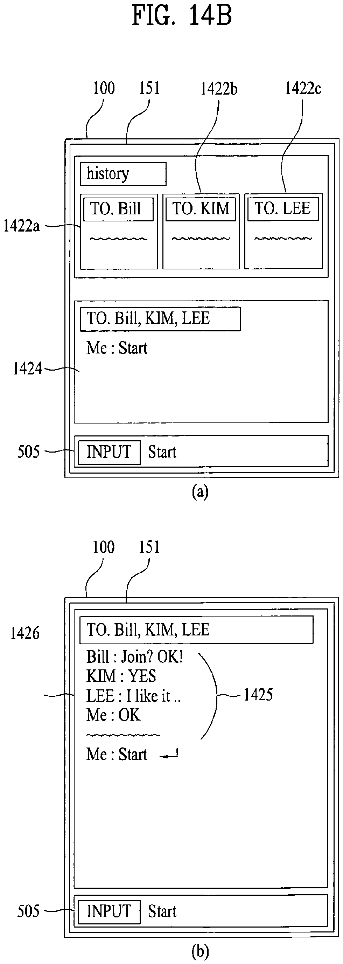

FIG. 14A and FIG. 14B are diagrams for a chat window merging operation according to the present invention.

As mentioned in the foregoing description of the present invention, each of a plurality of chat windows corresponds to one counterpart terminal. Yet, in the mobile terminal 100 according to the present invention, it may be unnecessary for one counterpart terminal to correspond to one chat window. In particular, one chat window may be able to provide a group chat service with a plurality of counterpart terminal.

Moreover, according to the present invention, a plurality of chat windows may be merged into at least one chat window entirely or in part. For instance, 4 chat windows are merged into 1 or 2 chat windows, whereby counterpart terminals respectively corresponding to the 4 chat windows can be set to join a group chat.

Referring to FIG. 14A (a), a menu 1401 for merging a plurality of chat windows is displayed. In particular, the menu 1401 may include a 'portion merge' command 1401a for merging a portion of a plurality of the chat windows and an 'all merge' command 1401b for merging all of the chat windows together. If a user selects a specific one of the commands from the menu 1401, a merging operation corresponding to the selected command may be performed.

Referring to FIG. 14A (b), a user selects the portion merge command 1401a. A chat window 1412 generated from merging a 1^{st} chat window 1402 and a 2^{nd} chat window 1404 together among a plurality of chat windows 1402, 1404, 1406 and 1408 and a chat window 1414 generated from merging the 3^{rd} chat window 1406 and the 4^{th} chat window 1408 together are displayed.

Referring to FIG. 14A (c), a user selects the all merge command 1401b. As a result of merging all the chat windows 1402, 1404, 1406 and 1408 together, one chat window 1416 is displayed. The controller 180 may be able to provide a group chat service with a plurality of counterpart terminals via the chat window 1416.

FIG. 14B shows an operation of displaying a history of chat contents respectively performed through a plurality of chat windows in case of merging a plurality of the chat windows.

Referring to FIG. 14B, in case that a chat service with counterpart terminals corresponding to a plurality of chat windows is provided via a plurality of the chat windows, chat contents via the corresponding chat service may exist as a history. The present invention may be able to provide these chat contents even if the chat windows are merged together.

Referring to FIG. 14B (a), if a plurality of chat windows are merged together, contents of the chat windows may be provided via a 1^{st} history window 1422a, 1 2^{nd} history window 1422b and a 3^{rd} history window 1422c.

Referring to FIG. 14B (b), in case that a plurality of chat windows are merged into one chat window 1416, various chat contents performed via previous chat windows may be provided as a history 1425 to the corresponding chat window 1416.

Accordingly, even if a plurality of chat windows are merged, a plurality of chat contents performed via previous chat windows may be saved to secure continuity of each of the chat contents for a user.

According to one embodiment of the present invention, the above-described touch recognizing methods can be implemented in a program recorded medium as computer-readable codes. The computer-readable media include all kinds of recording devices in which data readable by a computer system are stored. The computer-readable media include ROM, RAM, CD-ROM, magnetic tapes, floppy discs, optical data storage devices, and the like for example and also include carrier-wave type implementations (e.g., transmission via Internet).

The above-described mobile terminal may be achieved by combination of structural elements and features of the present invention in a predetermined type. Each of the structural elements or features should be considered selectively unless specified separately. Each of the structural elements or features may be carried out without being combined with other structural elements or features. Also, some structural elements and/or features may be combined with one another to constitute the embodiments of the present invention.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A mobile terminal, comprising:
a wireless communication unit configured to transceive a chat content with at least one counterpart terminal;
a controller configured to control at least one chat window respectively corresponding to the at least one counterpart terminal, each of the at least one chat window displaying the chat content transceived with a specific counterpart terminal corresponding to the corresponding chat window among the at least one counterpart terminal; and
a touchscreen configured to display the at least one chat window and one input window for receiving an input of the chat content,
wherein if entire region corresponding to the at least one chat window is bigger than a display region of the touch screen, the controller is further configured to control the touchscreen to display partial region belonging to the display region of the touchscreen among the entire region corresponding to the at least one chat window.

2. The mobile terminal of claim 1, wherein the controller is further configured to set a summary window configured to manage the at least one chat window and wherein the controller controls the summary window to be displayed on the display region.

3. The mobile terminal of claim 2, wherein the touchscreen is further configured to display at least one summary chat window, each of the at least one summary window chat corresponding to each of the at least one chat window and wherein the summary chat window indicates a presence or non-presence of a received chat content of the corresponding chat window.

4. The mobile terminal of claim 2, wherein the touchscreen is further configured to display at least one summary chat window, each of the at least one summary window corresponding to each of the at least one chat window and wherein if a specific summary chat window is selected among the at least one summary chat window via the touchscreen, the controller controls a specific chat window corresponding to the selected specific summary chat window to be displayed on an entire display region of the touchscreen.

5. The mobile terminal of any one of preceding claims, wherein if a specific chat content is inputted via the input window, the controller is further configured to control the specific chat content to be simultaneously displayed on the at least one chat window.

6. The mobile terminal of claim any one of preceding claims, wherein if a touch action for adjusting each of the at least one chat window is inputted, the touchscreen is further configured to display the corresponding chat window in a manner of adjusting a size or position of each of the at least one chat window, based on the touch action.

7. The mobile terminal of any one of preceding claims, further comprising a sensing unit configured to determine inclination information of the mobile terminal.

8. The mobile terminal of claim 7, wherein the controller is further configured to control the touchscreen to display the at least one chat window in a manner of shifting the at least one chat window to correspond to the inclination information of the mobile terminal determined by the sensing unit, and
wherein if the icon is positioned on the specific chat window among the at least one chat window, the controller is further configured to control the specific chat window to be selected.

9. The mobile terminal of any one of preceding claims, further comprising a microphone module configured to receive an input of an external audio content, wherein the controller is further configured to convert the external audio content to the chat content and controls the converted chat content to be displayed on the at least one chat window.

10. A method of controlling a mobile terminal, comprising the steps of:
initiating a multi-chat operation with at least one counterpart terminal;
setting at least one chat window respectively corresponding to the at least one counterpart terminal, each of the at least one chat window displaying a chat content transceived with a specific counterpart terminal corresponding to the corresponding chat window among the at least one counterpart terminal; and
displaying the at least one chat window and one input window for receiving an input of the chat content,
wherein if entire region corresponding to the at least one chat window is bigger than a display region of the touch screen, the controller controls the touchscreen to display partial region belonging to the display region of the touchscreen among the entire region corresponding to the at least one chat window.

11. The method of claim 10, wherein the setting step comprises the step of setting a summary window configured to manage the at least one chat window, and
wherein the displaying step comprises the step of displaying at least one summary chat window, each of the at least one summary chat window corresponding to the at least one chat window and the summary chat window indicates a presence or non-presence of a received chat content of the corresponding chat window.

12. The method of claim 11, wherein the displaying step comprises the step of displaying at least one summary chat window, each of the at least one summary window corresponding to each of the at least one chat window and wherein if a specific summary chat window is selected among the at least one summary chat window via the touchscreen, a specific chat window corresponding to the selected specific summary chat window is displayed on an entire display region of the touchscreen.

13. The method of claim 10, further comprising the steps of:
receiving an input of a specific chat content inputted via the input window; and
simultaneously displaying the specific chat content on the at least one chat window.

14. The method of claim 10, further comprising the steps of:
receiving an input of a touch action for adjusting each of the at least one chat window; and
displaying the corresponding chat window in a manner of adjusting a size or position of each of the at least one chat window, based on the touch action.

15. The method of claim 10, further comprising:
determining inclination information of the mobile terminal,
displaying an icon configured to move on the display region of the touchscreen, the icon moving according to the determined inclination information; and
if the icon is positioned on the specific chat window among the at least one chat window, selecting the specific chat window.
